# EUROPÄISCHE PATENTSCHRIFT

(11) **EP 2 257 761 B1**
(45) Veröffentlichungstag und Bekanntmachung des Hinweises auf die Patenterteilung: **06.01.2016**
(21) Anmeldenummer: 09726681.1
(22) Anmeldetag: 14.03.2009
(51) Int. Cl.: F28D 7/16, F28F 9/16, F28F 21/06, F28B 1/02, B01D 5/00, B29C 65/70, B29C 65/78, B29C 70/84, B29L 31/18

(54) **VERFAHREN ZUM HERSTELLEN EINES KONDENSATORS**
METHOD FOR MANUFACTURING A CONDENSER
PROCÉDÉ DE FABRICATION D'UN CONDENSATEUR

(30) Priorität: 02.04.2008 DE 102008016809
(43) Veröffentlichungstag der Anmeldung: 08.12.2010
(73) Patentinhaber: Terrawater GmbH, 24148 Kiel (DE)
(72) Erfinder: SCHLICKUM, Till, 24113 Kiel (DE)
(74) Vertreter: Lobemeier, Martin Landolf
(86) Internationale Anmeldenummer: PCT/DE2009/000356
(87) Internationale Veröffentlichungsnummer: WO 2009/121320

(56) Entgegenhaltungen:
- DE-A1- 1 479 420
- DE-A1- 3 152 899
- US-A- 3 697 635
- US-A- 5 865 244

## Beschreibung

Die Erfindung betrifft ein Verfahren zum Herstellen eines Kondensators, der mit einer Mehrzahl von parallel zueinander verlaufenden, in einem bestimmten Raster angeordneten Rohren versehen ist, deren Enden von jeweils einer Grundplatte gehalten werden.

Derartige Kondensatoren werden beispielsweise für Wasseraufbereitungsanlagen verwendet, bei denen eine Vielzahl von parallel zueinander verlaufende, von einem mit Feuchtigkeit beladenen Trägergas umströmte Rohre vorgesehen sind, die ein Kühlmedium führen.

Das Herstellen derartiger Kondensatoren ist problematisch, weil sich das Problem stellt, dass die freien Enden der Rohre jeweils von einer Grundplatte zusammengefasst werden müssen.

Ein Beispiel für einen derartigen Herstellungsprozess zeigt DE 1 475 420.

Der Erfindung liegt die Aufgabe zugrunde, ein Verfahren zum Herstellen eines derartigen Kondensators zu schaffen, das es auf einfache Weise ermöglicht, die freien Enden der Rohre mit einer Grundplatte zu verbinden.

Erfindungsgemäß wird diese Aufgabe durch die Merkmale des Anspruchs 1 gelöst. Anspruch 2 gibt eine bevorzugte Ausgestaltung dieses Verfahrens an.

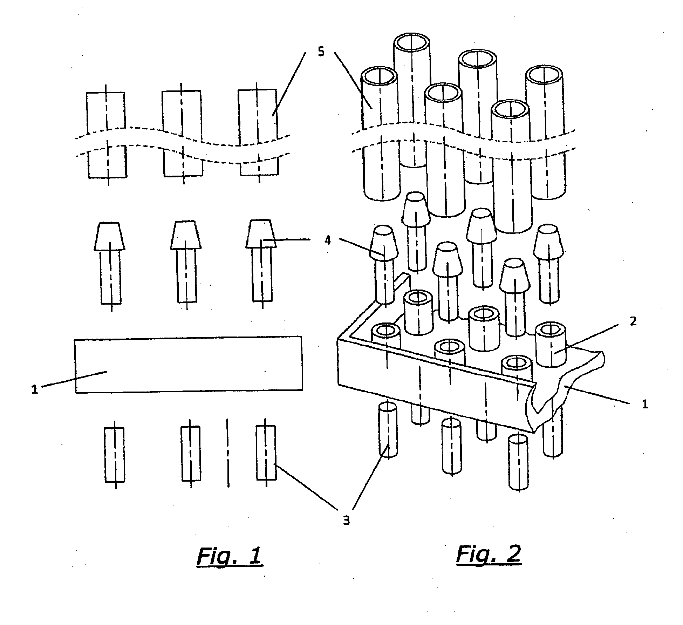

Die Erfindung wird im folgenden anhand einer Zeichnung erläutert, die die verschiedenen bei dem Verfahren verwendeten Elemente verdeutlicht, wobei Fig. 1 eine Seitenansicht dieser Elemente und Fig. 2 eine perspektivische Ansicht zeigt.

Es ist eine Wanne 1 vorgesehen, deren Grundfläche mit einer Vielzahl von in dem Raster, in dem die Rohre angeordnet sind, angeordnete Bohrungen aufweist. Auf die Bohrungen sind mit diesen Rohrstutzen 2 so angeordnet, dass deren nach oben weisenden Flächen miteinander fluchten. Der Außendurchmesser dieser Rohrstutzen 2 entspricht dem Innendurchmesser der Rohre. Sodann werden Füllstifte 3, deren Außendurchmesser dem Innendurchmesser der Rohrstutzen 2 entspricht, eingebracht. Sodann wird ein thermoplastisches Granulat in die Wanne 1 eingefüllt und aufgeschmolzen.

Nach dem Aufschmelzen des Granulats kann ein Stempel aufgesetzt werden, bis dieser auf die freien Flächen der Rohrstutzen 2 aufliegt. Dieser Stempel hat zum einen die Bedeutung, dass er das aufgeschmolzene Granulat verdichtet, zum anderen sorgt er für die Abfuhr überschüssigen Materials.

Sodann werden von oben Zentrierstifte 4 in die Rohrstutzen 2 unter Ausdrücken der Füllstifte 3 eingebracht, wobei der Außendurchmesser des Schaftes der Zentriertstifte dem Innendurchmesser der Rohrstutzen 2 entspricht und ein kegelstumpfförmiger Zentrierabschnitt dem Innendurchmesser der Rohre entspricht.

Die Wanne 1 wird sodann mit dem aufgeschmolzenen Granulat und den Zentrierstiften 4 auf die freien Enden der Rohre 5 aufgeschoben, wobei die kegelstumpfförmigen Zentrierabschnitte der Zentrierstifte 4 in die freien Enden der Rohre 5 eindringen. Dabei sind die Zentrierabschnitte vorzugsweise aus einem Kunststoff bevorzugt Teflon gebildet, damit der Innendurchmesser der Rohre nicht anschmilzt

Diese Einheit kann sodann abkühlen, wobei das aufgeschmolzene Granulat eine Grundplatte ausbildet, die die freien Enden der Rohre 5 dichtend aufnimmt. Nach Abziehen der Wanne 1 mit den Zentrierstiften 4 von der mit den Rohren 5 fest verbundenen Grundplatte kann derselbe Vorgang mit den anderen freien Enden der Rohre ausgeführt werden, wodurch der Kondensator erstellt ist.

## Patentansprüche

1. Verfahren zum Herstellen eines Kondensators, der mit einer Vielzahl von parallelen zueinander verlaufenden, in einem bestimmten Raster angeordneten Rohren (5) versehen ist, deren Enden von einer Grundplatte gehalten werden, **gekennzeichnet durch** folgende zeitlich aufeinanderfolgende Verfahrensschritte:
- Bereitstellen einer Wanne (1), deren Grundfläche mit einer Vielzahl von in einem bestimmten Raster angeordneten Bohrungen und mit den Bohrungen fluchtenden Rohrstutzen (2) versehen ist,
- Einbringen von Füllstiften (3) in die Rohrstutzen (2),
- Einbringen eines thermoplastischen Granulats in die Wanne (1),
- Aufschmelzen des Granulats in der Wanne (1),
- Einbringen von Zentrierstiften (4) in die Rohrstutzen (2) unter Ausdrücken der Füllstifte (3),
- Aufschieben der Wanne (1) mit dem aufgeschmolzenen Granulat auf die freien Enden der Rohre (5),
- Abkühlen des aufgeschmolzenen Granulats unter Bildung einer die freien Enden der Rohre (5) gasdicht aufnehmenden Grundplatte aus thermoplastischem Material und abschließend
- Abziehen der Wanne (1) und der Zentrierstifte (4) von der Verbindung aus Grundplatte und Rohre (5).

2. Verfahren nach Anspruch 1, **gekennzeichnet durch** Aufbringen eines Stempels auf die Grundplatte nach dem Aufschmelzen des Granulats zu dessen Verdichtung und Abführen überschüssigen Materials.

## Claims

1. A method for manufacturing a condenser, that is provided with a multiplicity of pipes (5) running parallel to each other and arranged in a specific grid, whose ends are held by a base plate, **characterized by** the following, temporally sequential method steps:
- providing a tub (1), whose base area is provided with a multiplicity of bores arranged in a specific grid and with pipe sockets (2) flush with the bores,
- introducing filling pins (3) into the pipe sockets (2),
- introducing thermoplastic granules into the tub (1),
- melting the granules in the tub (1),
- introducing centring pins (4) into the pipe sockets (2) while pressing-out the filling pins (3),
- sliding the tub (1) with the melted granules onto the free ends of the pipes (5),
- cooling the melted granules while forming a base plate, made of thermoplastic material, that receives the free ends of the pipes (5) in a gas-tight manner, and finally
- removing the tub (1) and the centring pins (4) from the connection of base plate and pipes (5).

2. The method according to Claim 1, **characterized by** applying a stamp onto the base plate after melting the granules for compressing them and removing excess material.

## Revendications

1. Procédé consistant en la fabrication d'un condensateur, doté d'une multitude de tuyaux (5) parallèles se rejoignant et insérés dans une grille spécifique, dont les extrémités sont maintenues par une plaque d'assise, **caractérisé par** les étapes successives suivantes :
- Mise à disposition d'une cuve (1) dont la base est dotée d'une multitude de forures insérées dans un cadre défini et des supports de tuyaux (2) courant dans la direction des forures,
- Insertion de baguettes de remplissage (3) dans les supports de tuyaux (2),
- Insertion d'un granulé thermoplastique dans la cuve (1),
- Fonte du granulé dans la cuve (1),
- Insertion de baguettes (4) dans les supports de tuyaux (2) en extrayant les baguettes de remplissage (3) par pression,
- Décalage de la cuve (1) avec le granulé fondu vers l'extrémité libre des tuyaux (5),
- Refroidissement du granulé fondu accompagné de la formation d'une plaque de base en matériau thermoplastique accueillant de manière étanche aux gaz les extrémités libres des tuyaux (5) et
- retrait de la cuve (1) et des baguettes de centrage (4) de la connexion entre la plaque de base et les tuyaux (5).

2. Procédé selon la revendication 1, **caractérisé par** la pose d'un tampon sur la plaque de base après la fonte du granulé afin de le comprimer et de retirer les excès de matériau.
